Europäisches Patentamt

European Patent Office

Office européen des brevets

(11) Publication number: **0 060 483**
A1

## (12) EUROPEAN PATENT APPLICATION

(21) Application number: 82101824.9

(22) Date of filing: **08.03.82**

(51) Int. Cl.³: **B 25 J 9/00**

(30) Priority: **18.03.81 IT 6736781**
**09.06.81 IT 6778881**
**15.01.82 IT 6703782**

(43) Date of publication of application: **22.09.82**
**Bulletin 82/38**

(84) Designated Contracting States: **AT BE CH DE FR GB LI**

(71) Applicant: **Cordara, Oscar, Piazza Campanella, 15,**
**I-10146 Torino (IT)**

(72) Inventor: **Cordara, Oscar, Piazza Campanella, 15,**
**I-10146 Torino (IT)**

(74) Representative: **Modiano, Guido et al, MODIANO &**
**ASSOCIATI S.A.S. Via Meravigli, 16, I-20123 Milan (IT)**

(54) **Manipulator robot.**

(57) This robot is of the type comprising a first training arm (13) having a tool holder (22) carried tiltably at its end, a second intermediate arm (12) articulated to the training arm (13) and to a base, a linkage enabling the tool holder (22) to maintain a constant orientation as the arm (12, 13) angles change, the improvement residing essentially in that the linkage includes a rod (23) cooperating with a ring gear (25) which, through a shaft (28) provided with bevel gears (27–29), transfers the angular motion to the tool holder (22) to compensate for its orientation changes.

COMPLETE DOCUMENT

ACTORUM AG

0060483

This invention relates to manipulator robots for carrying out industrial operations. More specifically, the invention concerns manipulator robots comprising a tool holder carried tiltably at the end of an arm, which is in turn articulated to a base through a second arm and a system of pantograph connecting rods which enable the tool holder to maintain a constant orientation during the angular movements of said arms, both relatively to each other and to the base.

Said pantograph system generally comprises a first rod, extending parallel to the training arm, a small transfer connecting rod of the tilting or rocking type which is pivoted to the articulation pivot pin between the two arms, and a second rod having one end articulated to the base, the arrangement being such that any changes in the relative angular position of the arms to the base are transmitted to the holder, which is accordingly rotated through a corresponding compensation angle while remaining parallel to itself. The system, while being satisfactory where the training arm is inextensible, becomes difficult to implement where the training arm is of the extensible type. In the latter case, in fact, it is also necessary to make the rod parallel to the training arm extensible, and a means must be provided for producing a perfectly identical extension (or retraction) of both the arm and rod, because any deviation in the relative

- 3 -

0060483

extensions would result in a corresponding rotation of the tool holder. A strict synchronization of the parallel arm and rod extension may be achieved through some hydraulic means, but the hydraulic controls have the disadvantage of a low operating speed, as well as considerable constructional complexity which are consequent to the necessity of providing a strict control of the constant ratio of flow delivery to the arm and rod jacks, respectively.

In view of the above-described prior drawbacks, this invention sets out to eliminate them.

In particular, it is the task of this invention to provide a robot having a training arm equipped with an improved meansfor controlling the orientation of the tool holding head, which means are adapted to allow the use of extensible arms driven by prompt control response members, in particular pneumatic controls.

Within this task, it is an object of theinvention to provide a robot which is improved from the standpoint of constructional simplification, with significantly reduced inertia masses, which enhances the training speed and, more generally, the handling speed of the tool holding head.

A further important object of the invention is that of providing an improvement to the linkage for controlling the orientation of the tool holding head, adapted,among others,to enable a quick and easy replacement of the arm extensible portion to

0060483

thus afford adaptability of the robot to varying applicational requirements.

Yet another object of this invention is that of solving, in a simple, effective and economical way, the problem of balancing the articulation arms, thus providing a manipulator robot of the type specified in the preamble, which can properly operate throughout the training range of said arms to ensure a linear, i.e. oscillation-free, displacement of the tool holder.

Yet another object of the invention is to provide a balancing system which can adjust itself to variations in the geometric attitudes of the arms, and particularly one that can compensate for the lengthening of the training arm where said arm is of the extensible type.

According to one aspect of this invention, the aforesaid task and objects as well as yet other objects, such as will be apparent from the detailed description which follows, are achieved by a manipulator robot for carrying out industrial operations, of the type comprising a training arm with a tool holder, and a linkage controlling the orientation of the tool holder, characterized in that said linkage comprises a single rod articulated, at one end, to the robot base, and at the other end, to a crank lever rigid with a first bevel ring gear arranged on the articulation axis of said training arm, which ring gear, through a transfer shaft having bevel pinion gears thereon, transfers the angular motion to a second ring gear rigid with said tool holder to compensate for said tool holder orientation variations due to corresponding oscillations of said training arm.

- 5 -

0060483

Advantageously the transfer shaft is parallel to the axis of the training arm, and when the latter is extensible, is formed by at least two parts torsionally coupled together but mutually slidable in the axial direction, the coupling being, for example, of the splined type.

According to a variation of the invention, with the compensation motion transfer shaft, there is associated a gear motor for independently rotating said shaft, said gear motor being interposed between the crank lever connected to the rod articulated to the base and the first bevel ring gear acting on the transfer shaft. The crank lever is rigid with the motor stator, which is carried rotatably on the articulation axis of the training arm, and the motor output shaft drives said ring gear through a reduction gear. The motor is further provided, in a conventional way, with a brake comprising a mechanical or electromagnetic member effective to lock the stator and rotor rigidly together.

Another feature of the robot according to this invention is that the intermediate arm articulated to the base is provided with elastic means which linearly compensate for its opposed tilting couples at those two portions of the angular displacement range which are separated by a vertical line led through the hinge axis , and the training arm articulated to the end of the intermediate arm is subjected to the balancing action of pneumatic means which act on said arm through the transfer connecting rod of the related displacement control.

Further features and advantages will become more apparent from the following detailed description, with reference to the accompanying illustrative, and not limitative, drawings, where:

Figure 1 is a schematic view, in side elevation, of an improved robot according to this invention;

Figure 2 is a schematic longitudinal view of the training arm, taken along the line II-II of Figure 1;

Figure 3 is a schematic sectional view, similar to Figure 2, showing a non-extensible training arm;

Figure 4 is a side elevation view of an improved training arm according to a preferred embodiment of the invention;

Figure 5 is a partly sectional plan view of Figure 4;

Figure 6 is a schematic sectional view, similar to Figure 2, showing a modified embodiment of the invention;

Figure 7 is an enlarged scale detail view of the constructional arrangement of a detail shown in Figure 6;

Figure 8 is a schematic sectional view similar to Figure 2, showing a further modified embodiment of the invention;

Figure 9 is an enlarged scale detail view showing the constructional arrangement of a detail of Figure 8; and

0060483

Figure 10 is an elevation view, similar to

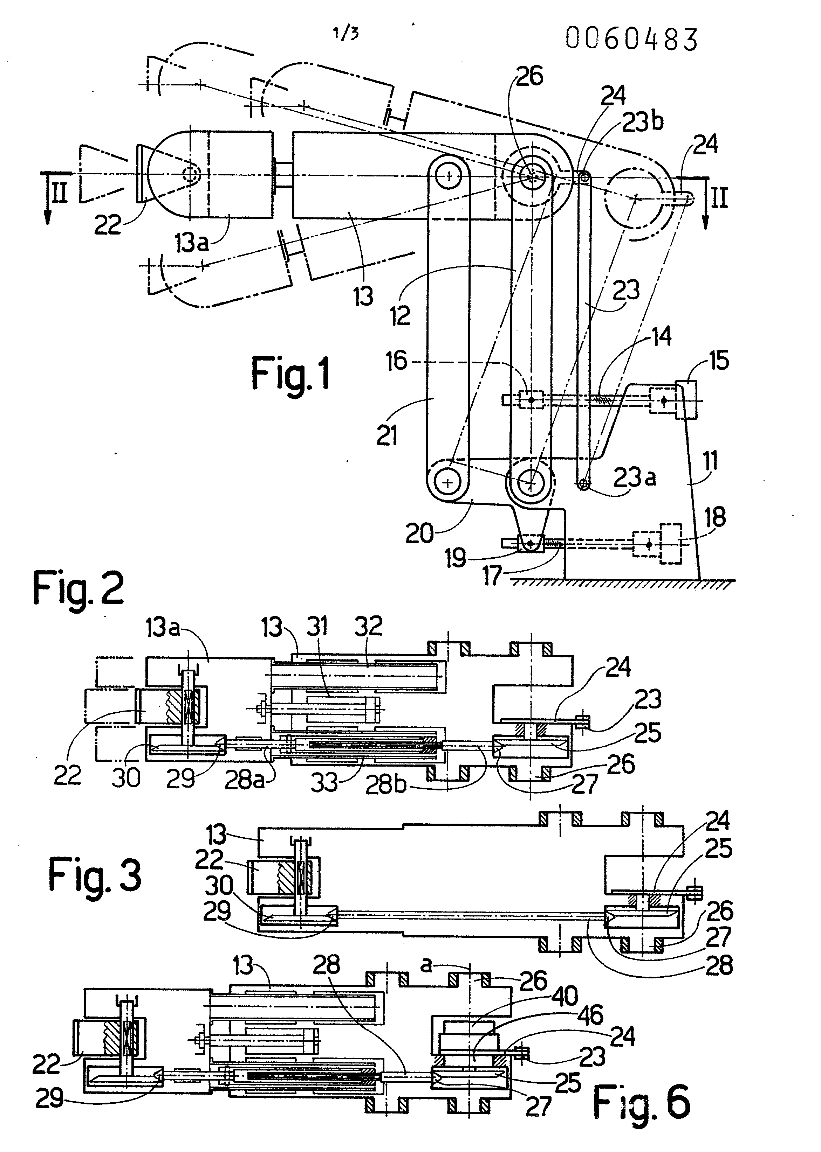

Figure 1, showing in detail the arm balancing means.

With initial reference to Figures 1 and 2,
generally indicated at 10 is this manipulator robot,
which comprises a base 11, an arm 13, the so-
called training arm, an intermediate arm 12 articulated
at one end to the training arm and, at the other end,
to the base 11, and means for controllably swinging
or oscillating the training arm relatively to the
intermediate one and the latter relatively to the
base. Such means will include a first screw 14 driven
by a gear motor 15 and engaging with a nut screw 16
on the intermediate arm 12, and a second screw 17
driven by a gear motor 18 and engaging with a nut screw
19 carried on the arm of a crank connecting rod 20
which, through a rod 21, transmits the oscillation
of the small connecting rod 20 to the training arm
13. At the free end of said arm, there is mounted
for oscillation a tool holder 22 linked to a
kinematic compensation system which keeps the
orientation of the holder unaltered when -- as shown
in dotted lines in Figure 1 -- the angular position
of the arms 12 and 13 is changed, both mutually and
with respect to the base 11.

In accordance with this invention, said
kinematic system, or linkage, comprises essentially
a rod 23 extending parallel to the intermediate arm
12 and having one end 23a articulated to the base 11
and the other end 23b articulated to a crank lever handle 24. The crank lever handle is rigid with a first bevel ring gear 25 which is carried freely rotatable relatively to the arm 13 and coaxially with the articulation 26 between the arms 12 and 13. A bevel pinion gear 27 meshes with the gear 25 which is keyed to the end of a driveshaft 28 which, through a further bevel pinion gear 29, transfers the angular motion to a second bevel ring gear 30 torque coupled to the holder 22. The drive ratio of the ring gears and related pinions is selected to be the same for both couplings and, accordingly, any relative rotation between the crank lever handle 24 and arm 13 is transmitted with equal amplitude and symmetrically with respect to the longitudinal axis of said arm to the holder 22, which thus maintains its position unaltered with respect to the crank lever. On the other hand, the arm 12, rod 23 and crank 24 form, together with the base 11, an articulated quadrilateral wherein unvaried remains the orientation of the crank 24 (and of the base) which will move parallel to itself as the arm 12 and rod 23 are rotated about their respective articulations on the base. The support 22, therefore, moves parallel to itself in each configuration of the arms 12-13 shown in dotted lines in Figure 1. If the training arm 13 is made inextensible, then the linkage will assume the configuration shown in Figure 3, where the shaft 28 is shown to be rigid. If the arm 13 is extensible, then the shaft 28 will also be extensible.

Figures 1 and 2 illustrate this constructional approach. Shown therein is a training arm having an extensible portion 13a driven for fast movement by a double-acting pneumatic jack 31. The portion 13a is supported on cylindrical guiding stems 32,33, one of which accommodates the transfer shaft 28. The latter is also formed in two portions 28a-28b which are telescopically extensible and torque coupled together, such as by means of a splined connection.

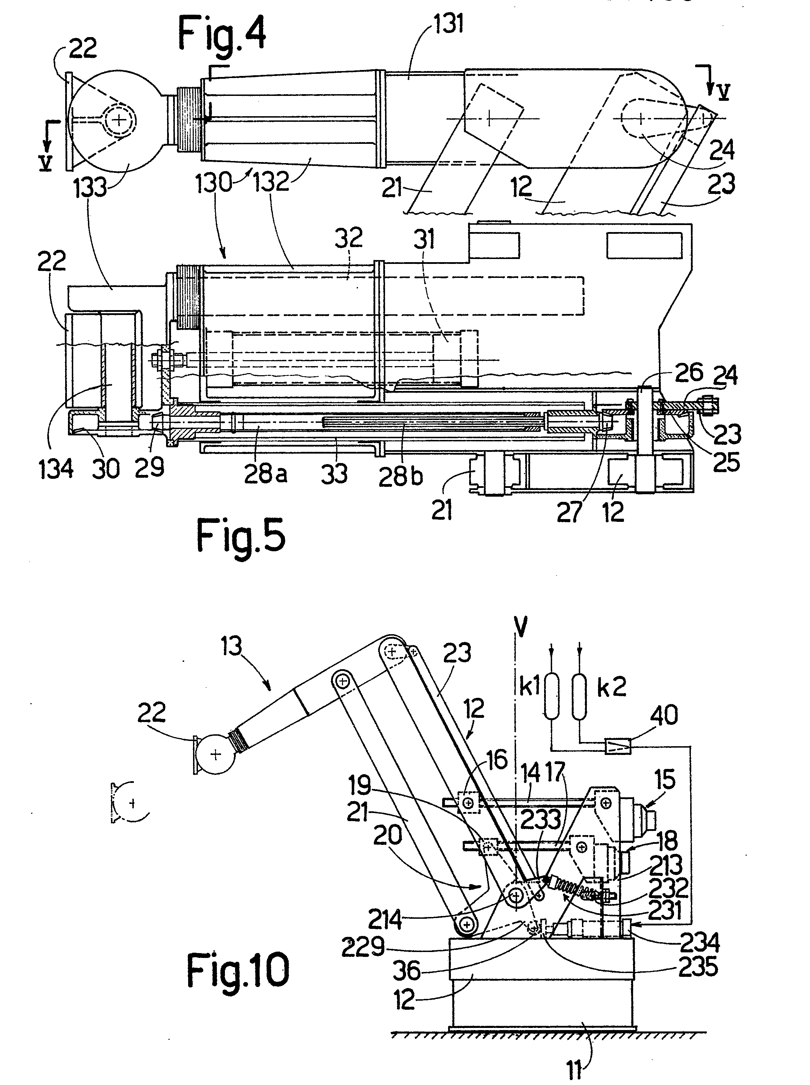

Figures 4 and 5 show a particularly advantageous embodiment of a training arm 130 of the extensible type. In addition to the characterizing elements of the system of compensating for the angular movements according to the invention (which elements are designated with the same reference numerals as in Figures 1 to 3), it comprises a fixed arm portion 131 and a portion, containing the extensible members, which is removably connected to the former and is indicated at 132. The removable portion 132 -- which is interchangeable with others, differring in length and/or characteristics of the extension movement driving members -- has mounted rigidly thereon the pneumatic jack 31, guide stems 32 and 33, as well as a portion 28a of the transfer shaft 28 which is accommodated through intervening bearings on the stem 33. To the ends of the stems 32-33, a gantry frame 133 is attached which supports for oscillation the holder 22, through a pin 134 to which is keyed the ring gear 30. The fixed portion 131 carries, in turn, the corresponding portion 28b of the transfer shaft, which portion, through the pinion 27, will receive its motion from the ring gear 25 which is supported for free rotation on the articulation pin 26 of the arms 12 and 130.

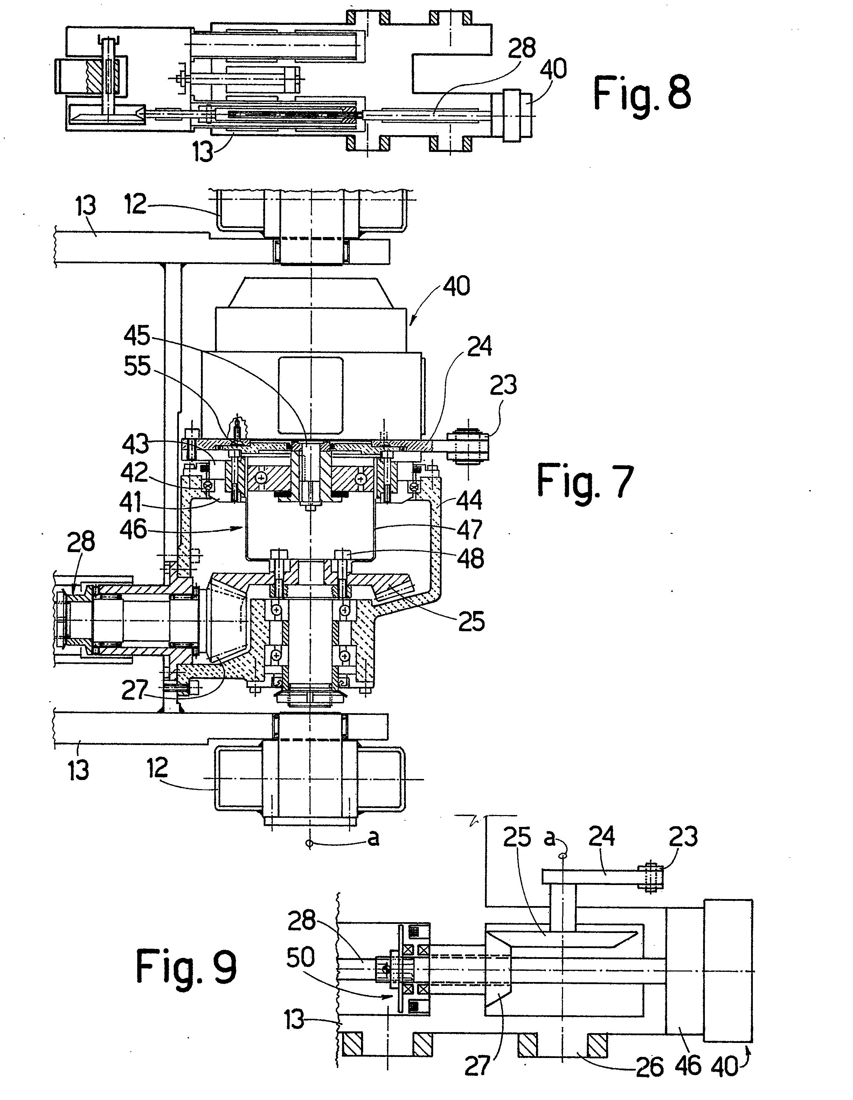

According to the modified embodiments shown in Figures 6 to 9, with the shaft 28, there is associated a gear motor capable of independently driving said shaft to produce corresponding changes of orientation in the head 22, even independently of the angular oscillations of the arms 12 and/or 13.

More specifically, with reference to Figures 6 and 7, it may be seen that on the axis $a$ of the articulation 26 of the training arm 13, there is provided an electric motor 40 which is supported, for rotation about said axis, by a flange 41. The flange 41 is in turn supported, with the interposition of a bearing 42 and collar 43, on a base 44 rigid with the arm 13. With the stator of the motor 40, there is rigidly connected the crank 24 by means of screws 55, thereby the oscillations of the latter cause corresponding oscillations of the stator about the axis $a$. To the shaft 45 of the motor 40, there is keyed a reduction gear 46, preferably of the conventional type having ellyptical gears and known commercially as "Harmonic Drive", manufactured by Harmonic Drive System GmbH of Langen, Federal Republic of Germany. The driven shaft or output shaft of said reduction gear, which comprises a bell-like disk 47, is made rigid with the ring gear 25 by means of bolts 48. Between the stator and rotor of the motor 40, there is interposed, in a manner known per se, a brake device of a mechanical or electromagnetic type, which is operative when the motor is de-energized, for the purpose of making said rotor and stator torsionally rigid together. Thus, when no power is supplied to the motor 40, the rotor and stator thereof are made rigid together, and accordingly, the oscillation of the crank 24 -- as produced by the movement of the arms 12 and/or 13 -- is transmitted directly to the ring gear 25 to compensate for the orientation of the head 22. When by contrast, the motor 40 is energized, the shaft 45 rotatively drives -- through the reduction gear 46 -- the ring gear 25 with respect to the motor stator and, hence, to the crank 24, thus producing, through the transfer shaft 28, corresponding changes of orientation in the head 22, independently of the oscillations of the arms 12 and/or 13.

Figures 8 and 9 illustrate a different arrangement of the motor 40, wherein the motor is coupled, through the reduction gear 46, directly to the transfer shaft 28. With this arrangement, the compensating linkage 23-24 can be maintained by interposing -- as shown in Figure 5 -- between the pinion 27 and shaft 28 a clutch 50, preferably an electromagnetic one. Said clutch shall have to be activated simultaneously with the motor 40 to release the shaft-pinion coupling as the motor is energized; the latter being in this case without an automatic brake. Alternatively, the compensating linkage 23-24 may be eliminated by assigning that same compensating function to the motor 40, which would then be powered through electronic feeder means including sensors for detecting the oscillations of the arms 12 and/or 13.

Moreover, according to this invention, both arms 12-13 are preferably separately and independently balanced in their angular displacements for the purpose of keeping constant the load on the screw drives 14-15, 16-17, with consequent displacement accuracy and total absence of vibrations. To this aim -- as shown in Figure 10 -- the intermediate arm 12, which effects symmetrical angular movements with respect to the vertical $\underline{V}$, is balanced with elastic means comprising a tension coil spring 231 hinge connected at one end to a slider 232 which is supported on shoulders 213 and, at the other end, to a ear 233 on the arm 12, set at right angles to the arm and located at the articulation pin 214. Consequently, the spring 231 will be at its configuration of least extension when the arm 12 is aligned with the vertical $\underline{V}$, said configuration being that in which the axis of the spring 231 coincides with the horizontal through the axis of the pin 214. Each angular displacement movement of the arm to one or the other side from the vertical $\underline{V}$ results in a similar displacement of the spring, which will stretch to provide an elastic action which increases linearly with the deformation, which action fully compensates for the tilting couple of the arm, due to weight and also increasing linearly with the angle of inclination. Thus, by suitably calibrating the spring rigidity, it is possible to fully compensate for the weight of the arm 12 over

0060483

the entire extent of the angular displacement thereof. The training arm 13, the training angle whereof is not symmetrical as regards weight, is instead compensated by the action of a pneumatic jack 234 having a rod 235 which acts, with the interposition of a pushrod roller 236, on a lug 229 of the transfer connecting rod 20. The pressure of the pneumatic fluid fed to the jack 234 is proportioned to the weight of the arm 13 and can be varied to compensate for any variations in the arm geometry. This affords the possibility of utilizing an arm 13 of the extensible type. In such a case, at least two delivery pressures may be used for the jack 234, namely one effective to compensate for the weight of the arm in the retracted configuration, and the other the weight corresponding to the fully extended configuration. To this end, the pneumatic delivery circuit comprises two capacities $K_1$-$K_2$ and different pressures selectively connectable to the jack 234 through a switch valve 240 driven by a travel limit sensor of the arm 13. However, it would also be possible to provide a continuous compensation by adjusting the fluid delivery pressure to the jack 234 with a continuous regulator driven by an analog sensor detecting the instantaneous extension of the arm 13.

CLAIMS

1. A manipulator robot for carrying out industrial operations, of the type comprising a training arm (13) with a tool holder, and a linkage controlling the orientation of the tool holder (22), characterized in that said linkage comprises a single rod (23) articulated, at one end, to the robot base (11), and at the other end, to a crank lever (24) rigid with a first bevel ring gear (25) arranged on the articulation axis of said training arm, which ring gear (25), through a transfer shaft (28) having bevel pinion gears thereon, transfers the angular motion to a second ring gear (30) rigid with said tool holder (22) to compensate for said tool holder orientation variations due to corresponding oscillations of said training arm (13).

2. A manipulator robot according to Claim 1, wherein said transfer shaft (28) is arranged parallel to the longitudinal axis of said training arm (13).

3. A manipulator robot according to Claims 1 and 2, wherein said training arm (13) is of the extensible type and said transfer shaft (28) comprises at least two parts (28a, 28b) torque coupled together but mutually slidable in the axial direction.

4. A manipulator robot according to the preceding claims, characterized in that it comprises an extensible training arm (13) with a removable and interchangeable portion (132) including a gantry frame (133) retaining said tool holder (22), a pneumatic cylinder (31) for moving said gantry frame (133), at least one sliding guide (37) for said gantry frame, and the hollow part (28a) of a transfer shaft (28) intended for torque coupling with a corresponding solid part (28b) of said transfer shaft (28) carried on that part (131) of the arm (13) which supports said removable portion (132).

5. A manipulator robot according to the preceding claims, characterized in that it comprises, associated with said transfer shaft (28), a gear motor (40-46) for independently and rotatively driving said shaft.

6. A manipulator robot according to Claim 5, characterized in that said gear motor (40-46) is interposed between the crank lever (24) connected to the rod (22) articulated to said base and said bevel ring gear (25) acting on said transfer shaft (28).

7. A manipulator robot according to Claims 5 and 6, characterized in that said crank lever (24) is rigid with the stator of said motor (40) which is supported rotatably about the articulation axis (a) of said training arm (13), and in that the motor output shaft (45) drives, with the interposition of a gear motor (46) with elliptical gears, said bevel ring gear (25), the motor (40) including a brake adapted to make said rotor and stator rigid together for the purpose of transmitting the angular oscillations of said crank lever (24) directly to said ring gear (25).

8. A manipulator robot according to Claim 5, characterized in that said gear motor (40 - 46) is keyed directly to said transfer shaft (28), and in that the pinion gear (27) of said shaft, meshing with said bevel ring gear (25), is keyed to said shaft with the interposition of a clutch (50) effective to release the connection between shaft and pinion upon energization of said gear motor (40 - 46).

9. A manipulator robot according to the preceding claims, characterized in that the intermediate arm (12) thereof includes elastic means (231) effective to compensate for the opposed tilting couples thereof at two portions of the angular displacement range which are separated by the vertical (v) led through the hinge axis, said training arm (13) being subjected to the balancing action of a pneumatic cylinder (234) which acts on said arm through the transfer connecting rod (20) of the related moving control (17 - 18).

10. A manipulator robot according to Claim 9, characterized in that said pneumatic cylinder (234) is fed with at least two different pressure values (K1 - K2) selected in relation with the retracted or extended configurations of said training arm (13).

1/3

0060483

Fig. 1

Fig. 2

Fig. 3

Fig. 6

Fig.4

Fig.5

Fig.10

Fig. 8

Fig. 7

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,P | GB-A-2 061 872 (HITACHI) <br> *Page 3, lines 20 to 68* | 1,5 | B 25 J 9/00 |
| Y | US-A-3 561 614 (AIDA TEKKOSHO) <br> *Column 5, lines 1 to 17* | 1,2 | |
| Y | US-A-2 861 699 (YOUMANS) <br> *Column 12, line 12 to column 13, line 36, column 23, lines 32 to 57* | 1,2 | |
| A | FR-A-1 329 083 (EVRARD) <br> *Page 1, column 2, lines 2 to 38* | 3 | |
| A | GB-A-1 393 349 (PYE) | | |
| A | EP-A-0 019 596 (BASFER) | | TECHNICAL FIELDS SEARCHED (Int. Cl. ³) <br><br> B 25 J 9 <br> B 25 J 11 <br> B 25 J 3 |
| A | US-A-4 024 961 (STOLPE) | | |

The present search report has been drawn up for all claims

| Place of search <br> THE HAGUE | Date of completion of the search <br> 22-06-1982 | Examiner <br> LAMMINEUR P.C.G. |
|---|---|---|